# EUROPEAN PATENT SPECIFICATION

(11) **EP 0 345 298 B1**
(45) Date of publication and mention of the grant of the patent: **11.08.1993**
(21) Application number: 88902987.2
(22) Date of filing: 15.01.1988
(51) Int. Cl.: C08G 8/00, C08G 73/00

(54) **CYANATO GROUP CONTAINING PHENOLIC RESINS, PHENOLIC TRIAZINES DERIVED THEREFROM**
CYANATGRUPPEN ENTHALTENDE PHENOLHARZE UND DAVON ABGELEITETE TRIAZINPHENOLHARZE
RESINES PHENOLIQUES CONTENANT UN GROUPE CYANATO ET TRIAZINES PHENOLIQUES DERIVEES DE CES RESINES

(30) Priority: 16.01.1987 WO PCT/US87/00123; 05.10.1987 US 104700
(43) Date of publication of application: 13.12.1989
(73) Proprietor: AlliedSignal Inc., Morristown, New Jersey 07962-2245 (US)
(72) Inventor: DAS, Sajal, Parsippany, NJ 07054 (US); PREVORSEK, Dusan, Ciril, Morristown, NJ 07960 (US)
(74) Representative: Brock, Peter William
(86) International application number: PCT/US88/00119
(87) International publication number: WO 88/05443

(56) References cited:
- EP-A- 0 147 548
- WO-A-85/03713
- WO-A-87/04443
- DE-A- 1 720 740

## Description

This invention relates to reaction products obtained from certain cyanato group containing phenolic resins, also known as phenolic cyanate resin and to a process of preparing same. More particularly, this invention relates to such resins which have improved properties and to a process for preparing such resins.

Phenolic resins are a class of synthetic materials that have grown continuously in terms of volume and applications for over several decades. The building blocks used in greatest volume are phenol and formaldehyde. Other important phenolic starting materials are the alkyl-substituted phenols, including cresols, xylenols, p-tert-butyl-phenol, p-phenylphenol, and nonylphenol. Diphenols, e.g., resorcinol (1,3-benzenediol) and bisphenol-A [bis-A or 2,2-bis(4-hydroxylphenyl)propane], are employed in smaller quantities for applications requiring special properties. In addition to formaldehyde, acetaldehyde or furfuraldehyde sometimes are employed but in much smaller quantities. The greater latitude in molecular structure, which is provided by varying the raw materials, chemistry, and manufacturing process, has made possible an extremely large number of applications for these products as a result of the array of physical properties that arise from the synthetic options.

The early investigation of the reaction of phenol and formaldehyde began with the work of von Baeyer and others in the early 1870's as an extension of phenol based dye chemistry. The initial experiments result in soluble, amorphous products whose properties elicited little interest. Insoluble, cross-linked products also were reported in the lates 1880's, but these products also were not perceived as useful materials. In 1888, the first patent for a phenolic-resin product intended for use as a hard-rubber substitute was granted. The first commercial product was introduced as a shellac substitute by the Louis Bluner Company in the early 1900's. Process patents were issued in 1894 and 1895 for ortho- and para-methylolphenol, respectively.

Key innovations in early phenolic-resin manufacture included control of the molecular structure and the use of heat and pressure to achieve desirable physical properties in filled compositions. Studies in the use of acidic or basic catalysts and of changes in the molar ratio of formaldehyde to phenol resulted in the definition of two classes of polymeric materials which are referred to as Bakelite resins. Caustic-catalyzed products, which are prepared with greater than a 1:1 mol ratio of formaldehyde to phenol, can be used to form cross-linked, insoluble, and infusible compositions in a controlled fashion. With less than a 1:1 mol ratio of formaldehyde to phenol, the resultant products remain soluble; furthermore, acid catalysis yields permanently stable compositions, whereas base-catalyzed materials can be advanced in molecular weight and viscosity. Possibly of greatest importance to early commercialization, however, was the reduction to practice of the use of heat and pressure to produce essentially void-free molding compositions.

Resole resins are made with an alkaline catalyst and a molar excess of formaldehyde. Novolak or novolac resins are prepared with an acid catalyst and less than one mol of formaldehyde per mol of phenol. The initial reaction involved in the preparation of resolated novolacs is carried out with an acid catalyst and less than a 1:1 mol ratio of formaldehyde to phenol. After formation of the novolac, the pH is adjusted so that the reaction mixture is basic and additional formaldehyde is added. Resoles and resolated novolaks are inherently thermosetting and require no curing agent for advancement. Novolacs, by comparison, are themoplastic and require the addition of a curing agent, the most common being either hexamethylene-tetramine or a resole. The stages of molecular weight advancement are characterized by liquid or solid phenolic polymer which is soluble in certain organic solvents and is fusible; solid resin which is insoluble but swelled by organic solvents and, although softened by heat, exhibits essentially no flow; and an insoluble, infusible product which is not swelled by solvents nor softened by heat, i.e., the system is in a highly cross-linked state.

Phenolic resins have many uses. For example, such materials are used as bonding agents in friction materials such as brake linings, clutch facings, transmission bonds and the like. For example, U.S. Patent Nos. 4,268,157; 4,069,108; 4,268,657; 4,218,361; 4,219,452; and 3,966,670 describe various friction materials in which a phenolic resin is employed as the bonding agent. Phenolics are also used as molding materials, and as coatings and adhesives. Phenolic resins developed for non-flammability and long-term temperature stability to 230°C have been studied in carbon-fiber composites. Potential for such composites lies in advanced aircraft application.

While present day phenolics exhibit several beneficial properties, they suffer from a number of disadvantages which restrict their utility. For example, such materials exhibit less than desirable thermal oxidative stability. Other major problems of present day phenolic technology include a need for auxilary chemicals such as hexamethylenetetramine to crosslink the phenolic which often results in the production of volatile by-products such as ammonia during crosslinking is often extensive and is not controllable.

Various modifications to phenolics have been proposed to obviate certain of the disadvantages attendant to these resins. For example, epichlorohydrin has been reacted with the hydroxyl groups of novolak forming epoxy novolak. Moreover, n-chloro-2-propene has been reacted with the hydroxyl groups of novolac to form the corresponding form methylon resin.

Japanese Patent publications Nos. 59-149918, and 58-34822 describe a method of preparing a phenolic resin containing cyanate groups. In this method, a trialkyl ammonium salt of a phenol novolak is reacted with excess cyano halogen in an organic solvent such as methylene chloride. The ammonium by-product salt is separated from the reaction mixture by extraction with water. Several disadvantages are attendant to the process of these references. The reaction is limited to being conducted in a water immiscible solvent. As a result it suitable only for cyanation of low molecular weight novolac resin below 320 Mn. We have found that the method disclosed in these references results in a phenolic cyanate resin which release smoke (volatiles) during curing at 155°C or above.

U.S. Patent No. 3,448,079 describes aromatic cyanic acid esters produced by the reaction of phenolic resins with cyanogen halide in which the hydroxyl groups of the phenol-formaldehyde resins are replaced with cyanic acid ester groups, and process for producing same. U.S. Patent No. 3,444,137 describes curable phenol-aldehyde resins characterized by molecules which contain a cyano group, an amine nitrogen atom, a phenyl group and a substituted hydroxyl group, such molecules having been made by reacting a phenol, formaldehyde and a cyano substituted primary or secondary amine. U.S. Patent No. 4,022,755 describes cyanato-group containing phenol resins, and a process for preparing same. U.S. Patent No. 4,713,442 disclosed a polytriazine which comprises 1, 3, 5-triaryloxytriazines. Polyaromatic cyanates are also disclosed in EPA 0 147 548, WO85/03713 and GB-A-1218447.

Cyanato group containing phenolic resins have been described in Delano, et al, Synthesis of Improved Phenolic Resins, Acurex Corp/Aerotherm, Acurex Vinyl Report 79-25/AS, September 4, 1979 prepared for NASA Lewis Research Center, Contract No. Nas3-21368, and is available through the United States Department of Commerce National Technical Information Service.

A recent reference, Heat Resistance Polymers by Critchley, et al, pp. 406-408 Plenum Press, New York, 1986 has described phenolic triazine resins prepared from phenolic novolac or meta-cresol novolac which have essentially the same chemical structures as described in the above referenced patents.

The phenolic triazines which have been disclosed have been found to have high thermal stability. However they have not been commercially produced because of poor shelf life, and a gel time too short for processing using conventional plastic processing equipment. It has been found as illustrated below, that reproduction of the phenolic cyanate ester resins disclosed in the art are unstable and not suitable for commercial applications such as matrix for various composites, impregnation media for paper and nonwovens, adhesives, coatings, etc. When these unstable resins are converted into a crosslinked product (phenolic triazines) mechanical properties have been observed to be poor. The cured resins are so brittle, that frequently a suitable test sample for property determination cannot be fabricated. It has been found that curing the phenolic cyanate ester resins prepared according to the disclosures in the art, generates smoke and volatile chemicals.

Various new polymers have been proposed. For example, Kunstoffe, Bd, 58, pp. 827-832 (1968) by R. Kubens, et al. and Dokl, and Akad, Nauk SSR Vol. 202, pp. 347-350 (1972) by V. V. Kovshak, et al. describe the "cyclotrimerization" of aryl cyanurate and properties of crosslinked polymers derived therefrom. The term "cyclotrimerization" is meant, forming a cyanurate ring system by chain extension polymerization of three aromatic cyanurate groups to form a crosslinked triazine ring system. Similarly, U.S. Patent Nos. 3,890,272; 4,118,377; and 3,929,713 describe the formation of poly (bismaleimides) and the properties of such polymers.

U.S. Patent No. 4,157,360 describes thermoformable compositions comprising a crosslinked polycyanurate polymer and a thermoplastic polymer in which the poly cyanurate is formed by a polycyclotrimerization reaction.

Phenolic cyanate resins have, according to their structural potential to form crosslinking products with outstanding thermal, oxidative stability as well as very high char yield upon heating to very high temperatures (900-1,000°C). However, resins prepared according to the teachings in the art have failed to yield products with these mechanical and thermal properties. Phenolic cyanato polymers (resins) have been found to give off smoke from volatiles upon curing. The volatiles include harmful irritants such as diethyl cyanamide. The present invention overcomes the shortcomings that have held back this potentially valuable resin from widespread commercial use.

WO87/04443 discloses curable phenolic triazine/phenolic cyanate copolymers having at least three phenolic moieties linked through oxygen by triasine moieties and having cyanate and optionally hydroxy substituents.

The present invention provides a completely cured, partially cured or incompletely cured phenolic resin prepared by reacting a bismaleimide compound of the formula: 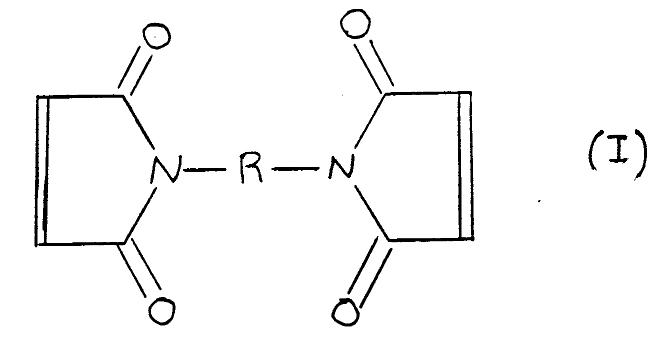
with a phenolic resin of the formula: 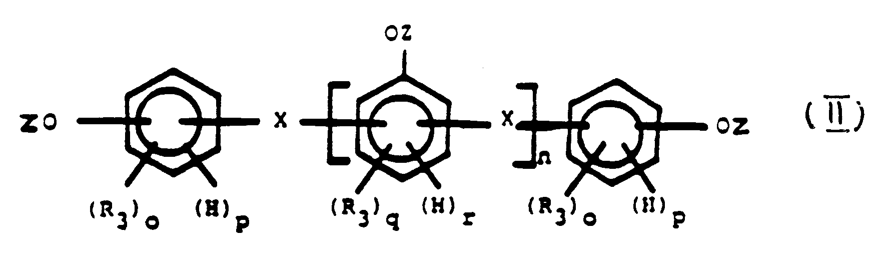
wherein:
-R- is a divalent aromatic or aliphatic moiety;
-X- is a divalent organic moiety;
Z is -CN, or hydrogen and -CN;
q and r are the same or different and are whole numbers from 0 to 3, with the proviso that the sum of q and r at each occurrence is equal to 3;
R₃ is the same or different at each occurrence and is halogen, trihalomethyl, alkyl, alkoxy or phenyl;
n is a positive whole number; and
o and p are the same or different at each occurrence and are whole numbers from 0 to 4 with the proviso that the sum of o and p at each occurrence is equal to 4,
said resin (II) containing from 5 to 100 mole percent of -OCN groups, based on the sum of moles of -OCN and -OH groups,
the phenolic resin (II) having substantially no smoke generation during gel time measurement at 155°C, a completely cured resin (I) being one in less than 20 mole percent of the original cyano groups remain uncyclotrimerized (as determined by IR spectrophotometry), a partially cured resin (I) being one in which 40 to 70 mole percent of the original cyano groups remain uncyclotrimerized, and an incompletely cured resin (I) being one in which 20 to 40 mole percent of the original cyano groups remain uncyclotrimerized.

The invention also provides a precured resin (I) prepared by reacting the above-defined bismaleimide compound and phenolic resin (II), a precured resin (I) being one in which substantially 100 mole percent of the original cyano groups remain uncyclotrimerized.

The resins (II) contain from 5 to 100, preferably 10 to 100, more preferably 50 to 100, most preferably 70 to 100 and yet more preferably 80 to 95 mole % of -OCN groups based upon the sum of the moles of the -OCN and -OH groups.

The resin compositions of the present invention are processable using conventional plastic processing equipment and have a long shelf life. This is indicated by the gel time of the resins (II) of greater than 1 minute, preferably greater than 2 minutes, more preferably greater than 10 minutes at 155°C. The gel time can be greater than 20 minutes at 155°C. There is substantially no smoke generation during gel time measurement at 155°C. The improved resin compositions of the present invention can react to form a phenolic triazine characterized as having a thermal stability indicated by thermal decomposition temperature of at least 400°C and preferably of at least 450°C as measured by Thermal Gravimetric Analysis (TGA).

It is believed that the improved properties attained by the cyanato group containing phenolic resin compositions of the present invention result is at least in part, from the resin having low residual amounts of dialkyl cyanamide which is typically a diethyl cyanamide. There is preferably less than 2% by weight, more preferably less than 1% by weight, and most preferably substantially no dialkyl cyanamide. Triethyl amine reacts with the cyanogen halide to form diethyl cyananide. This side reaction is an undesirable waste of the reactants. This side reaction can be minimized by conducting the reaction to form the cyanato group containing phenolic resins at from -5°C to -45°C. Traces of dialkyl cyanamide formation during the cyanation reaction can be removed by purification, typically during precipitation. Dialkyl cyanamide is an undesireable volatile material which is a harmful irritant.

The residual amounts of phenyl cyanate may be less than 2% by weight and preferably less than 1% by weight and most preferably 0.5% by weight.

The cyanato group containing phenolic resin used in the present invention preferably has a number average molecular weight of from 320 to 1500, preferably 500 to 1000 and more preferably 600 to 1000. With reference to Formula I a preferred embodiment is where n is from 6 to 10 and more preferably from 6 to 8.

Precured compostions can be made containing the compositions defined above, and cured, partially cured, completely cured and incompletely cured compositions, formed by "cyclotrimerization" of the cyano group to varying degrees. As used herein, "completely cured" modified resins are those in which less than 20 mole percent of the original cyano groups remain unreacted, i.e. uncyclotrimerized, as determined by the method of infrared spectrophotometry; "precured" modified phenolic resins are those in which substantially 100 mole percent of the original cyano groups are unreacted, i.e. uncyclotrimerized, as determined by the method of infrared spectrophotometry; "partially cured" modified phenolic resins are those in which from 40 to 70 mole percent of the original cyano groups are unreacted, i.e. uncyclotrimerized, as determined by infrared spectrophotometry; and "incompletely cured" modified phenolic resins are those in which from 40 to 20 mole percent of the original cyano groups are unreacted, i.e. uncyclotrimerized, as determined by infrared spectrophotometry.

The precured, partially cured, incompletely cured and completely cured resin compositions can be employed in admixture with one or more other materials, for example, thermoset and thermoplastic polymers such as kevlar and polyethylene, particulate and fibrous inorganic fillers as for example asbestos, mica, boron, or carbon,

The cured modified phenolic resin compositions of this invention exhibit several advantages over conventional phenolic resins. For example, certain of these materials are self crosslinking, and thus do not require auxilliary chemicals for crosslinking. Moreover, the cross-linked, i.e. cured, resins have excellent oxidative, mechanical and thermal stability, and no volatile, potentially environmentally hazardous by-products are produced during crosslinking. This is shown by substantially no smoke or volatile generation during gel time measurement at 155°C. Furthermore, the claimed compositions of this invention have high char forming properties.

The cyanato group containing phenolic resin of the Formula II is formed by first reacting novolac resin and a base, preferably trialkyl amine in a cyclic ether solvent to form a trialkylammonium salt of novolac. This step is then followed by reacting the trialkylammonium salt with a cyanogen halide in the cyclic ether to form the cyanato group containing phenolic resin. The reaction product is preferably separated by precipitation using non-solvent vehicle such as an alcohol with isopropanol being preferred. It is particularly preferred to conduct the reaction at a temperature below -5°C and preferably from -5°C to -45°C, more preferably -5°C to -30°C and most preferably -15°C to -30°C.

A particularly preferred embodiment is the precipitation of the reaction product of a novolac resin with a base and a cyanogen halide in a nonsolvent vehicle, preferably an alcohol, and most preferably isopropanol.

The partially cured, completely cured or incompletely cured phenolic resin is formed by cyclotrimerization of the modified phenolic resin of the Formula II: 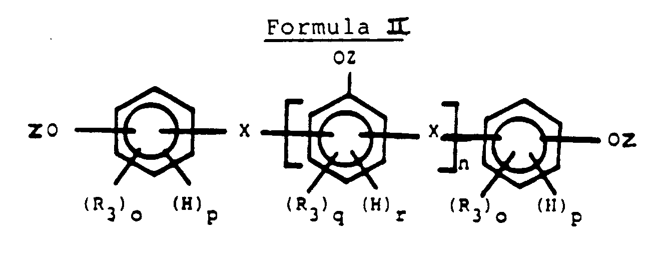
wherein R₃, n, q, r, a, o, P and X are as decribed above. By the term "polycyclotrimerization: is meant forming a cyanurate ring system by the chain extension polymerization of three aromatic cyanate groups to form the crosslinked triazine ring system which comprises the following basic repeat unit of the Formula III: 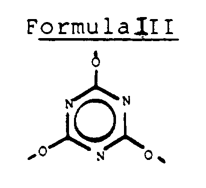
wherein the open valencies are bonded to a phenyl ring of a phenolic cyanate resin. The methods of conducting the polycyclotrimerization of cyanurate compounds are well known in the art, and include thermal annealing which can be conducted above 200°C. For example, such methods are described in Kunststoffe, BD, 58, pp 827-832 (1968) by R. Kubens et al and Pokl AK ad Nauk SSSR, vol 202, pp 347-350 (1972) by V.V. Korshak et al and U.S. Patent No. 4,157,360. For example, an appropriate modified phenolic resin of the above Formula II can be crosslinked, preferably neat, with or without an acceptable catalyst at elevated temperatures.

The cyanato group containing phenolic resin of the Formula II has a gel time of greater than 1 minute, preferably 2 minutes, more preferably greater than 10 minutes. The gel time can be greater than 20 minutes at 155°C.

An alternate way of measuring the improvement of the present invention is by the resin being capable of forming a phenolic triazine resin having the thermal stability of at least 400°C and preferably of at least 450°C as measured by Thermal Gravimetric Analysis (TGA). The phenolic triazine resin has a char value at 900°C of at least 50% by weight, preferably from 50 to 70% by weight, and more preferably 60 to 70% by weight.

It is believed that the improved properties of the resin are attributed to the resin having a residual amount of a dialkyl cyanamide, typically diethyl cyanamide of less than 2% by weight, preferably less than 1% by weight and most preferably substantially none. The diethyl cyanamide is undesirable because it generates smoke, volatiles, upon curing.

Preferably the cyanato group containing phenolic resin has a residual amount of phenyl cyanate of less than 2% by weight and preferably less than 1% by weight and most preferably less than 0.5% by weight. This is desirable since it has been found that the phenol cyanate is a volatile material that contributes to the formation of smoke, volatiles, during curing of the resin.

The cyanato group containing phenolic resin recited above can be obtained by the steps of reacting novolac resin and a trialkyl amine in an solvent, preferably a cyclic ether solvent to form the trialkylammonium salt of novolac. This is followed by reacting the trialkylammonium salt with a cyanogen halide in the cyclic ether to form the cyanato group containing phenolic resin. The method is conducted at a temperature range of below -5°C, preferably from -5°C to -45°C, more preferably from -5°C to -30°C and most preferably from -15°C to -30°C.

The reaction product is in solution in the cyclic ether. This reaction produce is a cyanato groups containing phenolic resin. It is separated from the solution by a suitable separation technique. The preferred technique is precipitation into a non solvent vehicle. Useful nonsolvents are alcohols with isopropanol being preferred. The separation is preferably conducted at atmospheric pressure. While it can be conducted at room temperature, the temperature is typically from -0°C to -45°C, preferably -5°C to -25°C. Precipitation is preferably conducted with agitation.

The above-described method results in a cyanato group containing phenolic resin having an unexpected improvement over the art. This is believed to result at least in part, from the order of the addition of the reactants. The prior art describes making cyanato containing phenolic resins by adding a trialkyl amine to a solution of a novolac resin and a cyanogen halide. The prior art does not recognize the importance of reacting the novolac resin in a trialkyl amine prior to adding the cyanogen halide in a water or alcohol miscible solvent, preferably cyclic ether solvents. The prior art method is described as adding trialkyl amine to a mixture of novolac resin in cyanogen bromide. This tends to form a diethyl cyanamide which consumes the triethyl amine. It also creates instability and high boiling impurities which are difficult to remove.

The cyanato group containing phenolic resin results in satisfactory cured triazine materials regardless of molecular weight. The preferred molecular weight range is a number average molecular weight of 320 to 1500, more preferably 500 to 1000 and most preferably from 700 to 1000. Considering Formula I, the cyanato group containing phenolic resin preferably has n being from 6 to 10 and more preferably 6 to 8. The molecular weight distribution and number average molecular weight of the cyanato group containing phenolic resin can be determined by gel permeation chromatography(GPC) using tetrahydrofuran as a solvent.

A useful incompletely cured polymer has from 10 to 20 mole % of original the phenolic groups from the phenolic resin reacted to form triazine moieties, from 60 to 90 mole % of the original phenolic groups from the phenolic resin substituted with -OCN groups and from 0 to 20 mole % of the phenolic groups remain as -OH groups, said mole % based on the total moles of the original phenolic groups in the original phenolic resin.

The cyanato group containing phenolic resins forms a phenolic triazine network upon heating and/or in the presence of a curing agent. The threshold polymerization temperature can vary widely depending on a number of factors, as for example, time, and the presence or lack of a catalyst, the type of catalyst when used, and the like. In general, the threshhold polymerization temperature depends on the level of substitution of -OCN groups for -OH groups in the original phenolic resin. Where substantially all of the -OH groups are converted to -OCN, and the gel time is greater than 20 minutes at 155°C than the threshold polymerization temperature is equal or greater than about 150°C, and typically equal or greater than 175°C. Threshold polymerization temperature has been measured suing a DuPont Model 9900 Differential Scanning Calorimeter. The threshold temperature is indicated by the onset of the curing exotherm. The peak indicates the maximum polymerization temperature. In the preferred embodiments of the invention, the polymerization or curing temperature is from 100°C to 350°C, more preferably from 100°C to 300°C, and most preferably 150 to 280°C. Amongst these particularly preferred embodiments, most preferred are those embodiments in which the polymeriation temperature is from 200°C to 250°C. Useful curing pressures can be from 2,17 to 3,55 MPa (300 to 500 psi) for 5 minutes to 1 hour depending on sample size. Heating can be accomplished by conventional methods know to those of skill in the art. Illustration of such methods are heating with an oil bath, vacuum, hot air annealing, compression molding and the like.

The polymerization can be carried out in the presence of a catalytically effective amount of a catalyst. Useful catalyst can vary widely and include anhydrous metal salts such as stannous chloride dihydrate, cuprous bromide, cuprous cyanide, cuprous ferricyanide, zinc chloride, zinc bromide, zinc iodide, zinc cyanide, zinc ferrocyanide, zinc acetate, zinc octate, silver chloride, ferrous chloride, nickel chloride, ferric chloride, cobaltous cyanide, nickel sulfate, stannic chloride, nickel carbonate, and the like. Also useful as catalyst are proton-donating organic reducing agents such as tetrahydropyridine, hydroquinone, 4,4-biphenol and the like. Amounts of the catalyst when used are not critical and can vary widely prided that the amount is sufficient to catalyze the reaction to the desired extent.

Reaction pressures are not critical and can vary widely. The reaction can be carried out at subatmospheric, atmospheric or super-atmospheric pressure. However, for convenience, the reaction is carried out at autogenous pressure or atomospheric pressure.

The cured phenolic resins of the this invention are prepared by reacting a bismaleimide of the formula 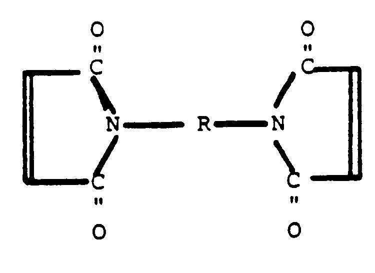
with the modified phenolic resin of the Formula II. 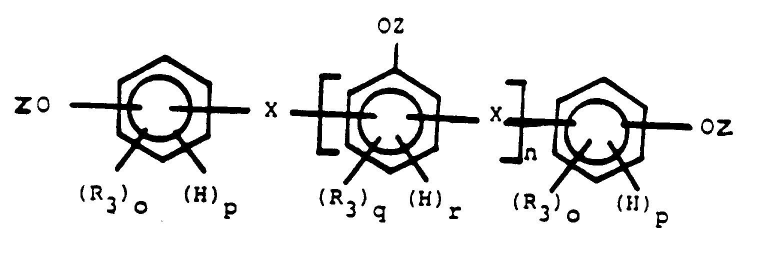
wherein -R-, Z, -X-, o, p, q, r, n and R₃ are described above. This reaction is carried out by reacting appropriate amounts of the reactants at elevated temperatures. Reaction temperature and pressure are not critical and can vary widely. In the preferred embodiments of the invention, the reaction is carried out at a temperature of 100°C to 200°C at atmospheric or autogenous pressure. The ratio of the reactants are not critical and will depend on the degree of crosslinking, i.e., curing or cyclotrimerization, desired.

Suitable -R- groups in the above recited bismaleimide include divalent aromatic and aliphatic moities. Illustrative of such groups are aliphatic groups such as ethylene, 2,5-dimethylhexanethylene, 4,4-dimethylheptanethylene, methylene, 2,2'-diethylene sulfone, 2,2'-diethylene sulfide, 3,3'-dipropylene sulfone, 3,3'-dipropylene ether, 1,3-propylene, 1,4-butylene, 1,8-octalene, 1,3-butylene, 1,6-hexylene, 1,7-heptalene, 1,5-pentylene, 1,10-decalene, 3-methylheptamethylene, 2,2-dimethyl-1,3-propylene and the like; cycloaliphatic groups such as 1,3-cyclopentyl, 1,4-cyclohexyl, 1,4-dimethylene cyclohexylene and the like; arylene such as 1,5-naphthalene, 1,4-phenylene, 1,3-phenylene, biphenylene, 1,3-benzene-dimethylene, 1,4-benzenedimethylene, 1,2-benzene-dimethylene, 2,2-bis-(4-phenylene) propane, bis-(4-phenylene) methane, 4,4'-phenylenepropane, 4,4'-phenylene sulfide, 4,4'-phenylene ether, 4,4'-phenylene sulfone, 4,4-diphenylene dimethylene and the like; and alkylene terminated polydiorganosiloxanes such as bis-(3-propylene) tetramethyldisiloxane, bis-(4-butylene tetramethyldisiloxane, and the like.

In the structure of Formula II, R₃ is halogen, trihalomethyl, alkyl, alkoxy or phenyl.

Illustrative of suitable -X- groups are alkylene such as methylene, ethylmethylene, 2-ethylpentylmethylene, methylmethylene, isopropylmethylene, isobutylmethylene, pentylmethylene, and furylmethylene, and the like; arylenes such as 1,3-benzenedimethylene, phenylmethylene, 1,4-benzenedimethylene, 2,2-bis-(4-phenylene)propane, 4-methoxyphenylmethylene, bis-(4-phenylene)methane, 4,4-diphenylene dimethylethane; and cycloalkylenes such as cyclohexylene, cyclooctylene, and 1,3-cyclohexanedimethylene, and the like.

Preferred Formula II are those embodiments in which:
Z is -CN, or hydrogen and -CN; preferably when Z is hydrogen and -CN from 20 to 100 mole percent of the Z moieties are -CN;
-X is substituted or unsubstituted methylene or 1,4-phenyldimethylene wherein permissible substitutents are alkyl or furyl;
q and r are the same or different at each occurrence and are positive whole numbers from 0 to 3, with the proviso that the sum of q and r is 3;
R₃ is alkyl; and
n is a positive number from 1 to 10;
o and p are the same or different at each occurrence and are positive whole numbers from 0 to 4, with the proviso that the sum of o and p is 4.

Amongst the preferred embodiments particularly preferred are those embodiments of above Formula II in which:
Z is hydrogen, or hydrogen and -CN with the proviso that from 30 to 80 mole percent of Z moieties are -CN;
-X- is methylene, methylene substituted with alkyl having from 1 to 10 carbon atoms, halogen or furfuryl, or xylene;
R₃ is methyl or ethyl;
o is 0 or 1;
p is 0 or 1;
n is 6 to 10, and more preferably 6 to 8;
q is o or 1
r is 1 to 3; and
p is 1 to 4.
Other preferred embodiments, are those embodiments wherein
n is 1 to about 5;
Z is -CN or hydrogen with the proviso that from 40 to 45 mole percent Z moieties are CN;
q is 0;
o is 0; and
X is a moiety of the formula;
-C_{y}H_{2y}-, -CF₂-, 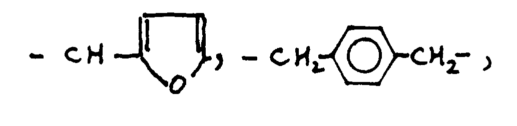 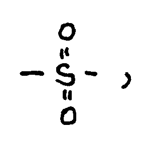
-S-, -O-, 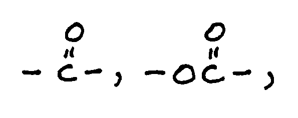
wherein y is a positive whole number, preferably one;
r is 3; and
p is 4.

In preferred bismaleimides, -R- is a divalent organic radical selected from the group consisting of (a) divalent aromatic hydrocarbon radicals having from 6 to 20 carbon atoms and halogenated derivatives thereof, (b) divalent alkylene radicals and cycloalkylene radicals having from 2 to 20 carbon atoms, (c) divalent polydiorganosiloxanes terminated with alkylene having from 2 to 8 carbon atoms, and divalent radicals of by the formula: 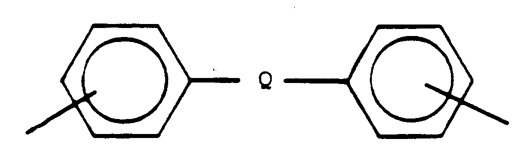
where Q is a member selected from the class consisting of: -O- , 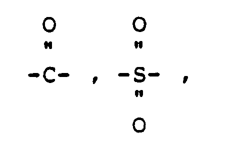
-S-, 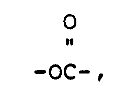
and -C_{y}H_{2y}-where y is a positive whole number; and that n, Z, q, o, p, r, -X- and R₃ are as in the preferred cyclotrimerized embodiments described above. In the particularly preferred embodiments of this aspect of the invention -R- is a divalent aromatic hydrocarbon or a divalent radical of the formula: 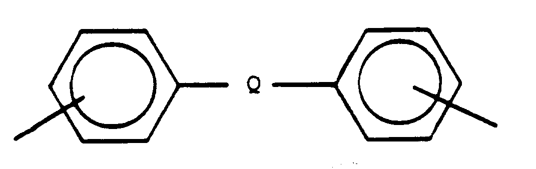
and n, Z, q, o, p, r, -X-, and R₃ are as described above for the particularly preferred cyclotrimerized embodiment.

A reinforced and/or filled composition comprising the completely cured, partially cured, and incompletely cured phenolic triazine/phenolic cyanate copolymer of this invention, as well as the compositions which may be used in the preparation of such reinforced compositions are also part of the invention disclosed herein. The completely cured, precured, partially cured, and incompletely cured compositions as described, may contain fillers for use in where the structural strength and integrity of a structure has to be maintained, and for other purposes known to those of skill in the art. Any suitable filler known to those of skill in the art can be used. Such fillers may be selected from a wide variety of organic and inorganic materials such as polymers, minerals, metals, metal oxides, siliceous materials and metal salts. Illustrative of useful fillers are fiber glass, steel, asbestos fibers, aramide, boron and carbon fibers, as well as plate like, fibrous and particulate forms of alumina, brass powder, aluminum hydrates, iron oxide, feldspar, lead oxides, asbestos, talc, barytes, calcium carbonates, clay, carbon black, quartz, novaculite and other forms of silica, koalinite, aluminum silicate bentonite, garnet, mica, saponite, beidelite, calcium oxide, and fused silica, calcium hydroxide. Other useful fillers include thermoplastic polymer, as for example, polyesters, polyimides, polyamides, polysulfones, polyaramids, polyester carbonates, polyethers, polyethersulfones, polyethylene, polypropylene, polycarbonates, polyetherimides, polysulfides, polyacrylates, and polyvinyls. The foregoing recited fillers are illustrative only and are not meant to limit the scope of the fillers that can be utilized in this invention. Methods for producing reinforced and/or filled compositions include melt blending, extrusion and molding processes, simple mixing and dispersion of both materials in suitable medium by methods known in the art.

The phenolic cyanate resin depicted in Formula II is prepared by a nucleophilic displacement reaction. In this reaction, a cyanogen halide, preferably cyanogen chloride or cyanogen bromide, is reacted with a base such as an alkali metal phenolic salt or a trialkyl ammonium salt of the formula III. 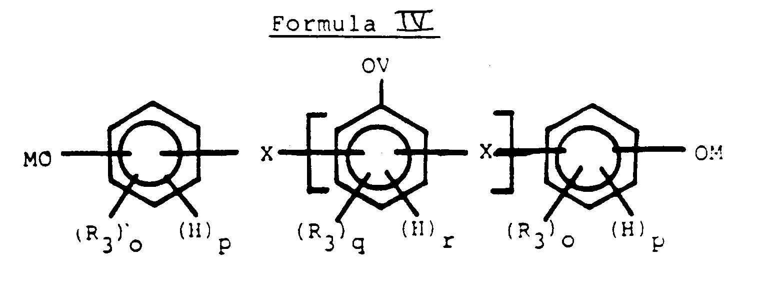
wherein R₃, -X-, q, r and n are as defined above, M is an alkali metal salt, or trialkyl ammonium and V is M or hydrogen, preferably under nitrogen in the presence of an aprotic solvent.

Reaction temperatures can vary widely. Preferred reaction temperatures are from 0°C to 120°C with agitation and more preferably from 0°C to 30°C.

Useful solvents can vary widely. The solvent is inert under the reaction conditions. Illustration of solvents useful in the conduct of this reaction are water, N,N-dimethyl acetamide, N,N-dimethyl formamide, N-methyl-2 pyrrolidone, propyl carbonate, cyclohexane, xylene, carbon tetrachloride, benzene, and dimethyl sulfoxide, ethers such as diglyme, and cyclic ethers with cyclic ethers preferred. Preferred cyclic ethers include tetrahydrofuran, 1,4 dioxan, and furan. The most preferred solvent is tetrahydrofuran. The cyclic ethers are preferred since low and higher molecular weight phenolic cyanate resins can be made, i.e. greater than about 600 Mn. (i.e. n > 6)
Reaction times can vary considerably and will depend upon such factors as the degree of agitiation, temperature, time, nature and proportion of reactants and the like. The reaction product can be recovered by conventional means. For example, the crude polymeric product can be precipitated by pouring the reaction mixture into a non solvent vehicle. A non solvent vehicle is defined to be a liquid medium in which the phenolic cyanate resin reaction product is insoluble and nonreactive. Preferred non solvent vehicles include alcohols, more preferably organic alcohols such as propanol, butanol, methanol, ethanol, glycol, polyglycol, with isopropanol being most preferred. The product can then be dried in vacuum over for 24 hour.

The cyanato group containing phenolic resin is preferably derived from a phenolic novolac. Useful phenolic novolac resins are known in the art. A typical and useful one is disclosed in U.S. Patent No. 4,022,755 at column 2 beginning at line 27. Particularly useful phenols include phenol, cresol and xylenol.

The cyanato group containing phenolic resin has a gel time measured by the Hot Plate Stroke Cure Method (see Examples) of greater than 1 minute, preferably greater than 2 minutes, more preferably greater than 10 minutes at 155°C. The gel time can be greater than 20 minutes at 155°C. The cyanato group containing phenolic resin of the present invention should be capable of forming a triazine resin have the thermal stability of at least 400°C, and preferably at least 450°C as measured by Thermal Gravimetric Analysis.

The stability of the resin compositions of the present invention results in part from the method of the present invention. The method results in a minimum of residual impurities which result in thermal instability and short gel time so as to have short shelf life. The resin should have a residual amount of diethyl cyanamide of less than 2% by weight, preferably less than 1% and more preferably none.

Another impurity that is detrimental is phenol cyanate. This is a volatile material which results in smoke and volatile chemicals during curing. The resin should have a residual amount of phenol cyanate of less than 2% by weight and preferably less than .5% by weight.

The polymerization is induced thermally. The threshhold polymerization temperature can vary widely depending on a number of factors, as for example, the presence or lack of a catalyst, the type of catalyst when used, the presence of free hydrogen groups and the like. In general, the threshhold polymerization temperature is defined above. In the preferred embodiments of the invention, the polymerization temperature is from 100°C to 350°C, and in the particularly preferred embodiments is from 100°C to 300°C. Amongst these particularly preferred embodiments, most preferred are those embodiments in which the polymerization temperature is from 120°C to 250°C. Heating can be accomplished by conventional methods known to those of skill in the art. Illustration of such methods are heating with an oil bath, vacuum, hot air annealing and compression molding.

The polymerization is preferably carried out in the presence of a catalytically effective amount of a catalyst. Useful catalyst can vary widely and include anhydrous metal salts such as stannous chloride dihydrate, cuprous bromide, cuprous cyanide, cuprous ferricyanide, zinc chloride, zinc bromide, zinc iodide, zinc cyanide, zinc ferrocyanide, zinc acetate, silver chloride, ferrous chloride, nickel chloride, ferric chloride, cobaltous cyanide, nickel sulfate, stannic chloride, and nickel carbonate. Also useful as catalyst are proton-donating organic reducing agents such as tetrahydropyridine, hydroquinone and 4,4-biphenol. Amounts of the catalyst when used are not critical and can vary widely provided that the amount is sufficient to catalyze the reaction to the desired extent.

Reaction pressures are not critical and can vary widely. The reaction can be carried out at subatmospheric, atmospheric or super-atmospheric pressure. However, for convenience, the reaction is carried out at autogenous pressure or atmospheric pressure.

During the esterification of the phenolic resin, we have discovered that in addition to formation of -OCN moieties, carbamate moieties may be formed by reaction of -OCN functions with active hydrogen containing materials such as H₂O and C₂H₅OH forming the carbamate functions -C(O)NH₂ or -C(OH) = NH, and -C(OC₂H₃) = NH respectively. In addition, when amines are employed as the base catalyst in the preparation of the phenolic cyanate as will be described in more detail below, dicyanamides as for example, (C₂H₅)₂ NCN, may form in the phenolic cyanate and consequently will be a contaminant in the desired phenolic cyanate/phenolic triazine copolymer. We have also discovered that the mole % of carbamate functions substituted to phenyl groups of the phenolic cyanate precursor used in the preparation of the phenolic triazine/phenolic cyanate copolymer of this invention and/or the amount of dicyanamide formed during the preparation of the phenolic cyanate precursor are critical to the processibility of the copolymer.

In general, the mole % of phenyl groups substituted with carbamate functions is equal to or less than 20 mole % based on the total moles of phenyl groups present in the phenolic cyanate resin, and the weight percent of dicyanamide present in the copolymer is equal to or less than 20 weight percent based on the total weight of the resin. In the preferred embodiments of the invention, the mole % of phenyl groups substituted with carbamate functions is equal to or less than 10 mole % based on the total moles of phenyl groups, and the weight percent of dicyanamide present in the resin is equal to or less than 5 weight percent based on the total weight of the resin. In the particularly preferred embodiments of the invention, the mole % of phenyl groups substituted with carbamate functions is equal to or less than 5 mole % based on the total moles of phenyl groups, and the weight percent of dicyanamide present in the resin is equal to or less than 2 weight percent based on the total weight of the resin. In the most preferred embodiments of the invention, the mole % of phenyl groups substituted with carbamate functions is equal to or less than 2 mole % based on the total moles of phenyl groups, and the amount of dicyanamide present in the copolymer is less than 1 weight percent based on the total weight of the resin; with those embodiments of the invention in which substantially no phenyl groups are substituted with carbamate functions and in which substantially no dicyanamide is contained in the resin being the embodiments of choice.

The improved properties of the resin are due to reacting the novolac resin and a trialkyl amine in a cyclic ether solvent to form the trialkylammonium salt of novolac resin this is followed by reacting the trialkylammonium salt with a cyanogen halide in the cyclic ether to form the cyanato group containing phenolic resin. The reaction is conducted at below -5°C, preferably to -5°C to -45°C, more preferably from -5°C to -30°C and most preferably from -15°C to -30°C.

The cyclic ether solvent has been found to be an important reaction medium to form the cyanato group containing phenolic resin. The cyclic ether solvent is preferably selected from the group consisting of: tetrahydrofuran; 1,4 dioxan; and furan. The trialkyl amine can be selected from triethyl amine, tripropylamine and triethylcyclohexyl amine. Additionally, the reaction medium can contain other bases to control the pH to help control the rate of the reaction.

The relative amounts of solvent i.e. tetrahydrofuran, trialkylamine, and phenolic resin used should be controlled to control gel time of the cyanato group containing phenolic resin. Concentrations can be measured as a function of the weight percent of the trialkyammonium salt which could be calculated based on the weight of the trialkylamine, phenolic resin and solvent. Preferably, the amount of trialkylammonium salt is from 5 to 35, more preferably 10 to 25, and most preferably from 10 to 20 percent by weight. The preferred concentration can vary depending on the specific solvents and reactants used.

The phenolic cyanate resin used as the precursor in the preparation of the phenolic cyanate polymer is prepared by a nucleophilic displacement reaction through use of the process of this invention. In this reaction, a cyanogen halide, preferably cyanogen chloride or cyanogen bromide, is reacted with a base pheolic salt of Formula IV: 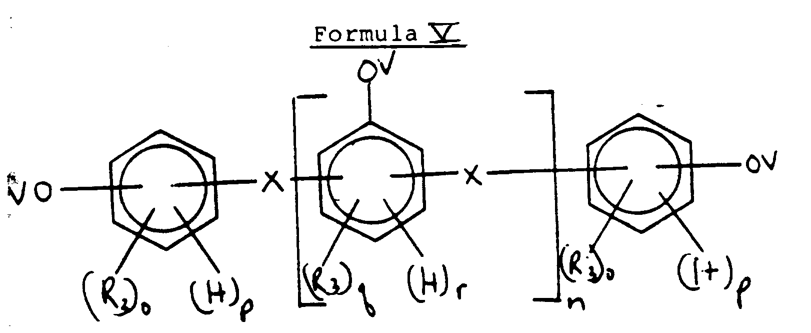
wherein R₃, -X-, o, p, q, r and n are as defined above, and V is hydrogen or cation of an organic or inorganic base which is formed by reaction between said base and the protons of a phenolic to form the corresponding basic salt, wherein the mole ratio of cations to hydrogen are sufficient to form the desired mole % of -OCN groups in the desired phenolic cyanate. V is preferably trialkyl ammonium. The reaction is preferably under nitrogen in the presence of an aprotic solvent in which the salt and cyanogen halide are soluble in the substantial absence of materials having active hydrogens.

We have discovered that the reaction temperature has a significant impact on the mole percent of carbamate formed during the formation of the phenolic cyanate. Reaction temperatures can vary widely provided that they are less than 0°C. It is believed that use of higher temperatures will result in the undesireable formation of diethyl cyanamide. Preferred reaction temperatures are equal to or less than -5°C and more preferably are equal to or less than -10°C. In the most preferred embodiments of the invention, reaction temperatures are equal to or less than -15°C.

It is also preferred that isolation and purification procedures preferably avoid the use of temperatures in excess of 0°C. In the more preferred embodiments of the invention, temperatures in excess of -5°C are avoided in the isolation and purification of the product, and in the most preferred embodiments temperatures in excess of -10°C are avoided. The use of temperatures in excess of those specified above during the reaction, and processing and isolation step results in the presence of an unacceptably large amount of carbamate functions.

Useful solvents can vary widely, with cyclic ethers preferred. The solvent should be inert under the reaction conditions and the reactants are soluble in the solvent. In this respect, the process differs significantly from the processes of Japan Kokai Nos. 59-149918 and 58-34822 in which the process is carried out in solvents such as methylene chloride in which relatively high molecular weight novolac salt is insoluble.

Illustration of aprotic solvents useful in the conduct of this reaction are amides such as N,N-dimethyl acetamide, N,N-dimethyl formamide, and N-methyl-2 pyrrolidone; ketones such as methyl ethyl ketone, and ethyl propyl ketone; organic carbonates such as propyl carbonate; ethers such as diglyme, tetrahydropyran, 3-methyltetrahydrofuran, tetrahydrofuran, and glyme; organic sulfur containing compounds such as dimethyl sulfoxide, sulfones and sulphonates; and chlorinated hydrocarbons such as methylene chloride, carbon tetrachloride and chloroform. The preferred solvents are ethers, and, particularly preferred solvents are cyclic ethers such as tetrahydrofuran, dioxan, and furan and diethers such as glyme or diglyme.

Reaction times can vary considerably and will depend upon such factors as the degree of agitation, temperature, nature and proportion of reactants and the like. Reaction times can be from 4 hours to 6 hours. The reaction product can be recovered by conventional means with substantially anhydrous conditions. Usually, the salt by-product is separated from the dissolved product by filtration. If solid when neat, the product can be isolated from solution using standard precipitated techniques using a nonsolvent vehicle. If liquid when neat, the product can be conveniently isolated and purified by conventional distillation or solvent evaporation techniques.

The base salt of phenolic polymer can be conveniently prepared by reaction between a base and a phenolic prepolymer. As noted above, bases for use in the preparation of the base salt may vary widely and may include both inorganic and organic bases. Illustrative of suitable bases are tertiary amines, alkali metal hydroxides, and alkali metal carbonates, more preferably alkali metal hydroxides such as sodium hydroxide and potassium hydroxide, and tertiary amines such as triethyl amine, trimethyl amine and pyridine, with triethyl amine most preferred.

Useful phenolic resin include phenol formaldehyde resin, substituted phenol formaldehyde resin, resole, lignin modified phenolic resin, cashew nut shell phenol formaldehyde resin, phenol furfuraldehyde resin, and p-xylene phenolic resin.

The phenolic cyanate polymer containing, completely cured, incompletely cured and partially-cured compositions of this invention are useful in forming a wide variety of industrial products, including shaped articles, as produced by known shaping processes. The compositions can be formed (i.e., shaped) into articles which can then be cured to form completely cured, incompletely cured and partially-cured articles. Shaped articles produced from the polymer composition include windscreens such as wind shields, structural parts, canopies, door windows, wire housing and the like. The shaping process can be any process known to one skilled in the art, such as injection, blow or extrusion molding. Another use of the crosslinked polymer of the member is a bind agent in the manufacture of friction materials such as brake linings, clutch facings and transmission bands, as for example those described in U.S. Patents 3,966,670; 4,268,657; or 4,281,361. Still other uses of the copolymers of this invention are molding materials, composites for use in the manufacture of structural parts. Yet other copolymers of this invention are useful as adhesives.

The following Examples illustrate the production of phenolic resins II that may be employed in this invention and of intermediates usable in the preparation of the phenolic resins.

In the examples, all parts are by weight unless otherwise noted.

### EXAMPLE 1

### A. Preparation of the Phenolic Cyanate

A mixture of 1.81 kg of novolac (phenol formaldehyde resin) (613 number average molecular weight), and 1.79 kg triethylamine was dissolved in 7L of tetrahydrofuran at ambient temperature. Cyanogen bromide (2.04 kg) was dissolved in 6L of tetrahydrofuran under nitrogen atmosphere. The solution containing the trialkylammonium salt of novolac was added to cyanogen bromide solution oveer a period of 3-4 hrs. During the addition, the temperature of the reaction mixture was maintained at -20°C to -15°C. After the reaction was completed, the reaction was allowed to continue for an additional 16-18 hrs. at room temperature. The product was isolated by filtration to remove trialkylamine salt. The filtrate was purified by precipitation in 26L of cold isopropanol/dry ice mixture (-15°C to -20°C) (twice), and subsequently dried in a vacuum oven overnight to produce off-white phenolic-cyanate. The elemental analysis indicated %C=72.25, %H=3.42, and %N=10.22. The IR spectrum indicated strong absorption at -C=N(2250 cm⁻¹) and the absence of any carbamate and dicyanamide functions.

### B. Preparation of a Phenolic Triazine/Phenolic Cyanate Copolymer

A 50g sample of phenolic-cyanate of Step A was heated in a test tube for about 20 min. at 100°C to form a yellowish white meltable phenolic cyanate-phenolic triazine copolymer. The IR spectrum indicated the presence of cyanate functions (2250 cm⁻¹) and triazine functions (1580 cm⁻¹ and 1380 cm⁻¹). The copolymer was soluble in tetrahydrofuran, methylene chloride, acetone, and methyl ethyl ketone. The Elemental analysis was, %C 72.25, %H 3.42, %N 10.22. The IR spectrum indicated about 15 to about 20 mole % triazine based on the total moles of phenyl groups in the copolymer.

### EXAMPLE 2

### A. Formation of the Phenolic-Cyanate

A mixture of 50g of novolac (570 number average molecular weight) and 51.0g of triethylamine was dissolved in 160g of tetrahydrofuran at ambient temperature. A 57.7g sample of cyanogen bromide was dissolved in 135g of tetrahydrofuran under nitrogen atmosphere. The solution of the trialkylammonium salt of the novolac was added to the cyanogen bromide solution over a period of 1 hr. During the addition of the solution, the temperature of the reaction mixture was maintained at about -10 to 15°C. After the addition was completed, the reaction was allowed to continue for an additional 1 hour period at room temperature. The product was isolated from the trialkyl ammonium bromide salt by-product by filtration. The product was purified by precipitation in isopropanol/dry ice mixture (-15°C to -20°C) and subsequently dried in a vacuum oven overnight to produce off-white phenolic-cyanate.

The structure of the product was confirmed by IR spectrum which showed the presence of cyanate functions (-C=N, 2200-2300) and the absence of carbamate functions (-NH- and = NH 3330 cm⁻¹).

### B. Preparation of the Phenolic Cyanate/Phenolic Triazine Copolymer

A 10g sample of phenolic-cyanate of Step A was heated in a test tube about 30 min. at 100°C to form a yellowish polymer. The IR spectrum indicated the presence of 60 to 65 mole % cyanate (2250cm⁻¹), 15 to 20 mole % triazine (1580cm⁻¹, and 1380cm⁻¹) and about 10 mole % phenolic hydroxyl (3400 cm⁻¹).

The elemental analysis was %C=72.0, %H=4.61, and %N=9.55. The copolymer was soluble in organic solvents like tetrahydrofuran, methylene chloride and methyl ethyl ketone.

### EXAMPLE 3

### A. Preparation of the Phenolic Cyanate

A mixture of 75.8g of cyanogen bromide was dissolved in 75g tetrahydrofuran. A 61.2g sample of high ortho content novolac of number average molecular weight 620 was dissolved in 100g of tetrahydrofuran and 66.7g of triethylamine was added gradually to form trialkylammonium salt of novolac. The trialkylammonium salt of novolac solution was added to the cyanogen bromide solution gradually during the time of addition the temperature of the reaction mixture was maintained at about -20 to -10°C. After the addition was completed, the reaction was allowed to continue for 18 hrs. at room temperature. The product was isolated from trialkylammonium bromide salt by-product by filtration.

The isolated solution was added gradually to isopropanol/dry ice mixture (-15°C to -20°C). A white precipitate was formed. The product was redissolved in tetrahydrofuran and reprecipitate in isopropanol. The IR spectrum was consistent with the proposed structure and showed the absence of carbamate functions.

### EXAMPLE 4

### A. Preparation of the Phenolic Cyanate

A sample of 315g of cyanogen bromide was dissolved in 500g of tetrahydrofuran. A 288g sample of novolac (320 number average molecular weight) was dissolved in 700g of tetrahydrofuran, and 286g of triethylamine was added gradually to form the trialkyammonium salt of the novolac. The solution of the trialkylammonium salt of novolac was added to the cyanogen bromide solution gradually. During the addition, the temperature of the reaction mixture was maintained at about -20 to -15°C. After the addition was completed, the reaction was allowed to continue for 20 hrs. at room temperature. The product was isolated from trialkylammonium bromide salt by-product by filtration.

The isolated solution was added gradually to isopropanol, forming a white gum. The gum was redissolved in tetrahydrofuran and reprecipitate in isopropanol. The resulting gum was redissolved in tetrahydrofuran, and the tetrahydrofuran solution was concentrated with a rotary evaporator. A light yellow viscous liquid formed. The IR spectrum was consistent with the proposed structure and showed the absence of carbamate functions.

### B. Preparation of the Phenolic Triazine/Phenolic Cyanate Copolymer

### Copolymer

A 100g sample of viscous liquid phenolic-cyanate of Step A was heated 1½ hrs. under nitrogen to form a solid product. The IR spectrum indicated the formation of about 20 mole % linear triazine ring. The product was soluble in acetone, methyl ethyl ketone and CH₂Cl₂.

### EXAMPLE 5

### Preparation of the Phenolic Cyanate/Phenolic Triazine Copolymer

A 5g sample of the phenolic cyanate from Step A of Example 1 was heated 5 min. at 125°C to form phenolic cyanate-triazine copolymer. IR spectrum indicate about 10 mole % triazine formation. The copolymer is soluble in organic solvents.

### EXAMPLE 6

### Preparation of the Phenolic Cyanate

A mixture of 6.5g of novolac (570 number average molecular weight) and 3.3g of triethylamine was dissolved in 30 ml of diglyme at ambient temperature. A 3.5g sample of cyanogen bromide solution was dissolved in 20 ml of diglyme under nitrogen atmosphere. The solution containing the trialkylammonium salt of novolac was added to cyanogen bromide over a period of 20 minutes. During the solution additon, the temperature of the reaction mixture was maintained at about -10°C. After the addition was completed, the reaction was allowed to continue for an additional 1 hour period at room temperature. The product was isolated from trialkylammonium salt by filtration and the resulting filtrate was purified by precipitation in isopropanol/dry ice mixture at -5°C and subsequently vacuum dried to obtain a white product. The structure of product was confirmed by IR spectrum.

### EXAMPLE 7

### Formation of the Phenolic-Cyanate

A mixture of 50g of novolac (570 number average molecular weight) and 51.0g of triethylamine was dissolved in 160g of tetrahydrofuran at ambient temperature. A 57.7g sample of cyanogen bromide was dissolved in 135g of tetrahydrofuran under nitrogen atmosphere. The solution of the trialkylammonium salt of the novolac was added to the cyanogen bromide solution over a period of 1 hr. During the addition of the solution, the temperature of the reaction mixture was maintained at about -10 to -15°C. After the addition was completed, the reaction was allowed to continue for an additional 1 hour period at room temperature. The product was isolated from the trialkyl ammonium bromide salt by-product by filtration. The product was purified by precipitation in isopropanol at room temperature and a white gum formed. The white gum was difficult to solidify. Analysis by GC indicated about 2-5% carbamate, and about 1-2% dicyanamide.

### EXAMPLE 8

### A. Formation of the Phenolic-Cyanate

A mixture of 50g of novolac (570 number average molecular weight) and 51.0g of triethylamine was dissolved in 160g of tetrahydrofuran at ambient temperature. A 57.7g sample of cyanogen bromide was dissolved in 135g of tetrahydrofuran under nitrogen atmosphere. The solution of the trialkylammonium salt of the novolac was added to the cyanogen bromide solution over a period of 1 hr. During the addition of the solution, the temperature of the reaction mixture was maintained at about 20°C. After the addition was completed, the reaction was allowed to continue for an additional 1 hour period at room temperature. The product was isolated from the trialkyl ammonium bromide salt by-product by filtration. The product was purified by precipitation in isopropanol/dry ice mixture (-15°C to -20°C) and subsequently dried in a vacuum oven overnight to produce off-white phenolic-cyanate.

The structure of the product was confirmed by IR spectrum which showed the presence of cyanate functions (-C=N, 2200-2300). The presence of about 2 to 3% dicyanamide was determined by GC.

### EXAMPLE 9

### A. Preparation of the Phenolic Cyanate

A mixture of 1.81 kg of novolac (613 number average molecular weight), and 1.91 kg triethylamine was dissolved in 7L of tetrahydrofuran at ambient temperature. Cyanogen bromide (2.16 kg) was dissolved in 6L of tetrahydrofuran under nitrogen atmosphere. The solution containing the trialkylammonium salt of novolac was added to cyanogen bromide solution over a period of 3-4 hrs. During the addition, the temperature of the reaction mixture was maintained at -20°C to -15°C. After the reaction was completed, the reaction was allowed to continue for an additional 16-18 hrs. at room temperature. The product was isolated by filtration to remove trialkylamine salt. The filtrate was purified by precipitation in 26L of isopropanol/dry ice mixture (-20°C) (twice), and subsequently dried in a vacuum oven overnight to produce off-white phenolic-cyanate. The elemental analysis indicated %C=72.25, %H=3.42, and %N=10.22. The IR spectrum indicated strong absorption at -C=N(2250 cm⁻¹) and the absence of any carbamate functions, and dicyanamide.

### B. Preparation of the Phenolic Triazine/Phenolic Cyanate Copolymer

A 50g sample of phenolic-cyanate of Step A was heated in a test tube for about 20 min. at 100°C to form a yellowish white meltable phenolic cyanate-phenolic triazine copolymer. The IR spectrum indicated the presence of cyanate functions (2250 cm⁻¹)and triazine functions (1580 cm⁻¹ and 1380 cm⁻¹). The copolymer was soluble in tetrahydrofuran, methylene chloride, acetone, and methyl ethyl ketone. The Elemental analysis was, %C 72-25, %H 3,42, %N 10.22. The IR spectrum indicated about 15 to about 20 mole % triazine based on the total moles of phenyl groups in the copolymer.

### COMPARATIVE EXPERIMENT A

### (1) Preparation of the Phenolic Cyanate of Japanese Kokai No. 149918-1984.

To a 2 Liter beaker was added 384g of novolac (550 number average molecular weight), 330.4g of triethylamine and 768g of methylene chloride. A highly viscous solution of the trialkyl ammonium salt of the novolac resulted. A 417.6g sample of cyanogen bromide was added to 976g methylene chloride in a 4 liter beaker, and the solution was cooled to 0°C. The trialkylanmonium salt solution was added to the cyanogen bromide solution over a 45 min. period using an addition funnel while maintaining the temperature of the reaction exotherm at about 0°C with a dry ice/isopropanol bath. The heterogeneous reaction mixture was then allowed to react for an additional 30 min., after which it was poured into 300 ml of deionized water with stirring. The methylene chloride layer was isolated and washed 2 times with 300 ml of deionized water. Upon concentration in a rotory evaporator, a semisolid product was obtained which upon drying under vacuum pump provided a solid product.

The analysis of the semisolid product by gas chromatograph indicated the presence of dicyanamide by-product. IR spectrum of solid material indicated the presence of carbamate functions (about 10-15%) at 1740 cm⁻¹ and 3300 cm⁻¹.

### (2) Preparation of the Phenolic Cyanate/Phenolic Triazine Copolymer From the Phenolic Cyanate.

Using the procedure of Example 1, the phenolic cyanate of step A was treated to form a phenolic cyanate/phenolic triazine copolymer.

IR spectrum indicate presence of about 15-20 mole % triazine formation. The polymer is soluble in organic solvents.

### COMPARATIVE EXAMPLE B

### (1) Preparation of the Phenolic Cyanate of U.S. Patent No. 4,022,755.

To a 2 liter beaker was added 100 g of novolac (380 number average molecular weight) and 500 ml methylethylketone. A yellow solution was observed in 10 minutes. The solution was cooled to 0°C, and 113g of cyanogen bromide was added. A 99.8g sample of triethylamine was added to the novolac-cyanogen bromide solution. The rate of addition was controlled to provide a temperature of from 5-10°C. After the triethylamine addition, a heterogeneous reaction mixture was observed. The triethylammonium bromide salt by-product was filtered from the reaction mixture, and the filtrate was concentrated on a rotary evaporator under reduced pressure. The product obtained was insoluble in organic solvents and a gel was observed. The IR spectrum indicate formation of carbamate at 1740 cm⁻¹ and 3300 cm⁻¹. The GC analysis of reaction filtrate indicate the presence of about 5-7% dicyanamide.

### (2) Preparation of the Phenolic Cyanate/Phenolic Triazine Copolymer.

The above gel product of Step A was heated at about 125°C to form phenolicyanate/phenolic triazine copolymer.

This product was moldable at 160°C, 300 psi.

### COMPARATIVE EXAMPLE C

### (1) Preparation of the Phenolic Cyanate of U.S. Patent No. 4,022,755

To a mixture of 108g (0.999 mole) of m-cresol and 65g (0.801 mole as CH₂O) of formalin (37% CH₂O) were added 0.2g of (0.0022 mole) oxalic acid and 0.1g (0.0010 mole as HCl) of hydrochloric acid (35%). The mixture was heated at 99°C to 100°C to form an emulsion. The emulsion was refluxed for 4 hours and 30 minutes, and then dehydrated under reduced pressure to obtain a solid cresol novolac. The resulting cresol novolac had a melting point of 92°-103°C.

In 210 ml of acetone was dissolved 72g (0.6 mole as -OH) of the m-cresol novolac. The resulting solution was cooled to 0°C. To the cooled solution was added 70g (0.661 mole) of cyanogen bromide followed by dropwise addition of 64g (0.632 mole) of triethylamine. After completion of the reaction, the triethylamine hydrobromide salt was removed. The resulting reaction mixture was added to vigorously stirred water. A semi-solid product obtained which was dried 40°C in a vacuum oven to 18 hrs. to obtain a solid powder having a melting point of 72-78°C. IR spectrum revealed a strong absorption at 2250 cm⁻¹ which indicated formation of cyanate (about 80-85%). The spectrum also indicate 5 mole % carbamate formation and 10-15 mole % of unreacted hydroxyl groups.

A 50 g sample of the phenolic cyanate was molded in a 3" x 3" mold at 155°C, 300 psi for 10 min. The materials squeeze out from the mold without forming representative sample for thermal (Tg) and mechanical measurements.

### (2) Preparation of Phenolic Cyanate/Phenolic Cyanate Triazine Copolymer

A 20g sample of m-cresol phenolic-cyanate (M.P 72-78°C) was heated 80°C for 20 min. to form a meltable phenolic cyanate-phenolic triazine copolymer which was soluble in organic solvents. IR spectrum analysis indicated that the copolymer included about 30 mole % linear triazine formation.

The above copolymer was molded in a 3" x 3" mold at 155°C, 300 psi, for 10 min. to obtained a tough plague. During the time of molding, there was very little loss of material due to flashout.

### COMPARATIVE EXAMPLE D

### (1) Preparation of Phenolic Cyanate of U.S. Patent No. 3,448,079.

A 106g sample of novolac (620 number average molecular weight) and which contains one OH group per 106 molecular weight was dissolved in 250 ml of acetone. The solution was cooled to 0°C after which 128 g of cyanogenbromide was added. To the solution was then slowly added dropwise 145 ml of triethylamine. Cyanogen bromide (5g) was then added to the reaction mixture during the course of the reaction to replace evaporation loses. The triethylaminehydrobromide salt produced by the reaction was removed by suction filtration, and the filtrate concentrated by evaporation to provide a solid powder. IR spectrum indicated cyanate formation and the presence of carbamate functions.

### (2) Preparation of the Phenolic Triazine/Phenolic Cyanate Copolymer.

A 50g sample of phenolic cyanate of Step A was heated to 100°C for 15 min. to form the phenolic triazine/phenolic cyanate copolymer having 5-10 mole % triazine. This material was molded at 155°C for 6 min to provide a plague. The plague was postcured for about 4 hrs. before any thermal and mechanical properties measurements were obtained.

### COMPARATIVE EXAMPLE E

A series of experiments were carried out for the purpose of evaluating the thermal characteristics of certain embodiments of this invention whose preparation is described in Examples 1(A), 1(B), 2(A), and 4(A) and to compare same to the thermal characteristics of the materials of Comparative Examples A(1), B(1), C(1) and D(1) and to the thermal characteristics of a base phenolic resin. The thermal characteristics were chosen for comparative purposes because these characteristics impact significantly on the use of these materials in high temperature applications. In these experiments, thermogravimentric analysis (TGA) was carried out in an argon atmosphere to determine the weight loss of a sample as a function of temperature and the % Char at 1000°C. These experiments were carried out using a Dupont-1090 thermogravimeter at a heating rate of 10°C/min. The typical size sample was 30-40 mg. The results of these experiments are set forth in the following TABLE I.

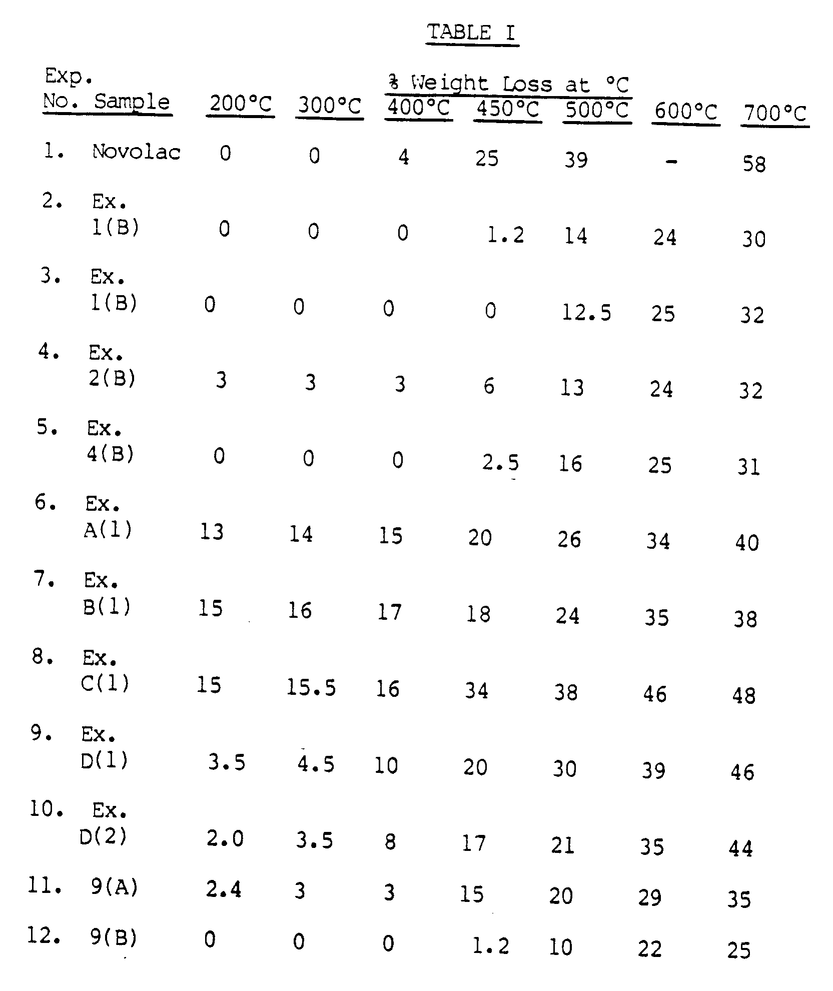

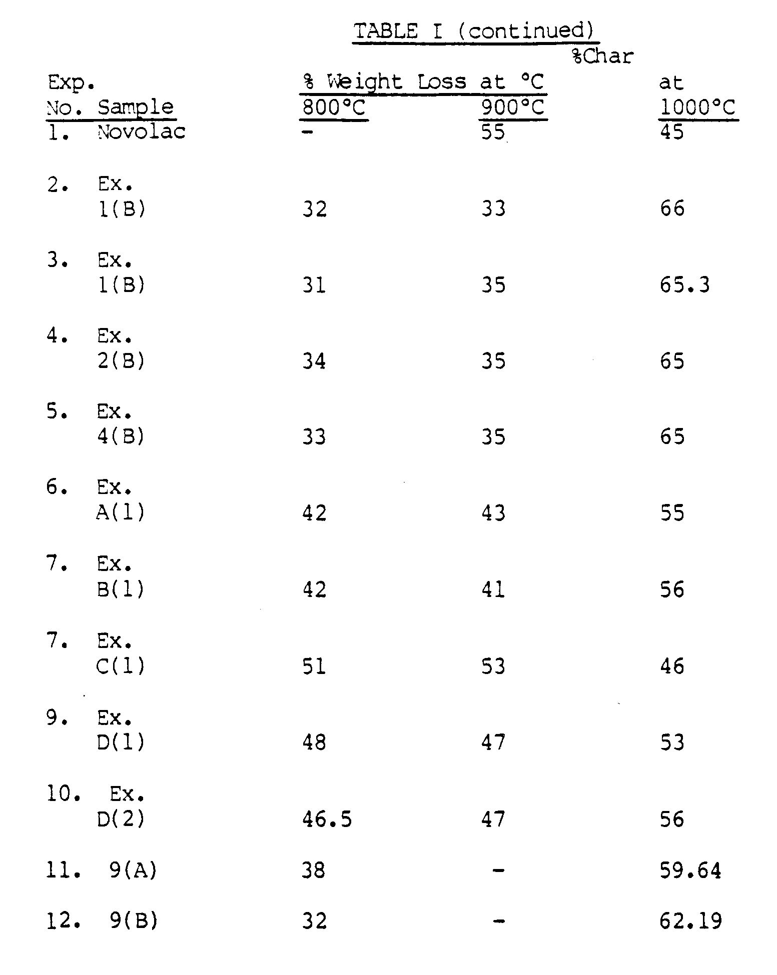

### COMPARATIVE EXAMPLE F

A series of experiments were carried out for the purpose of evaluating the glass transition (Tg) of cured compositions of this invention whose preparations are described in Examples 1(A), 1(B), 3(A) and 3(B) and to compare same to the glass transition temperature of the cured compositions formed from the compositions whose preparation are described in Comparative Examples B(1), C(1), C(2), D(1) and D(2). In these experiments, the glass transition temperature was determined on molded articles. Molding was carried out for 6 minutes at 155°C followed by post curing for 4 hours at 22°C. The glass transition temperature was determined on a 4 cm x 1 cm plagues by dynamic mechanical analysis (DMA) where the upper limit was 300°C. The results of the test are set forth in the following Table II.

**Table II**

| Exp. No. | Sample | Tg (°C) |
|---|---|---|
| (1) | Ex. 1(A) | >280 |
| (2) | Ex. 2(B) | >300 |
| (3) | Ex. 3(A) | >300 |
| (4) | Ex. 3(B) | >300 |
| (5) | Ex. 9(B) | >300 |
| (6)* | Ex. B(1) | 68 |
| (7) | Ex. C(1) | 250 |
| (8) | Ex. C(2) | 280 |
| (9) | Ex. D(1) | 225 |
| (10) | Ex. D(2) | 250 |

| | | |
|---|---|---|
| * The sample did not cure properly, and formed blisters. | | |

### COMPARATIVE EXAMPLE G

Using molded plagues formed as described in COMPARATIVE EXAMPLE F, a series of experiments were carried out for the purpose of evaluating the flexural modulus and flexural strength of cured compositions of this invention formed from the compositions of this invention whose preparation are described in Examples 1(A) and 1(B), and to compare same to the flexural strength and tensile strength of cured compositions formed from the compositions whose preparation is described in Comparative Examples C(1), C(2), D(1) and D(2). In these experiments, the flexural strength and the flexural modulus were determined using an Instrum Machine with standard test methods, ASTM D790. The results of these experiments are set forth in the following Table III.

**Table III**

| Exp. No. | Sample | Flexural Strength (psi) | Flexural Modulus (psi) |
|---|---|---|---|
| 1 | Ex. 1(B) | --- | --- |
| 2 | Ex. 2(B) | 9785(687.9kg/cm²) | .69x10⁶(0.48x10⁵kg/cm²) |
| 3 | Ex. 9(B) | 10,937(768.94 kg/cm²) | .61x10⁶(0.42x10⁵kg/cm²) |
| 4 | Ex. 3(B) | --- | --- |
| 5 | Ex. C(2) | 6275(441.1kg/cm²) | .67x10⁶(0.47x10⁵kg/cm²) |
| 6 | Ex. D(1) | --- | --- |
| 7 | Ex. D(2) | 8200(576.5kg/cm²) | .68x10⁶(0.47x10⁵kg/cm²) |

### COMPARATIVE EXAMPLE H

A series of experiments were carried out for the purpose of evaluating the shelf life of each of the compositions of this invention whose preparations are described in Examples 1, 2 and 4 and to compare same to the shelf life of each of the compositions whose preparations are described in Comparative Examples A(1), B(1), C(1) and D(1). In these experiments, the shelf of the composition was determined by storing same at room temperature to determine the number of days necessary for the formation of materials which were insoluble in several organic solvents. The results of these studies are set forth in the following Table IV.

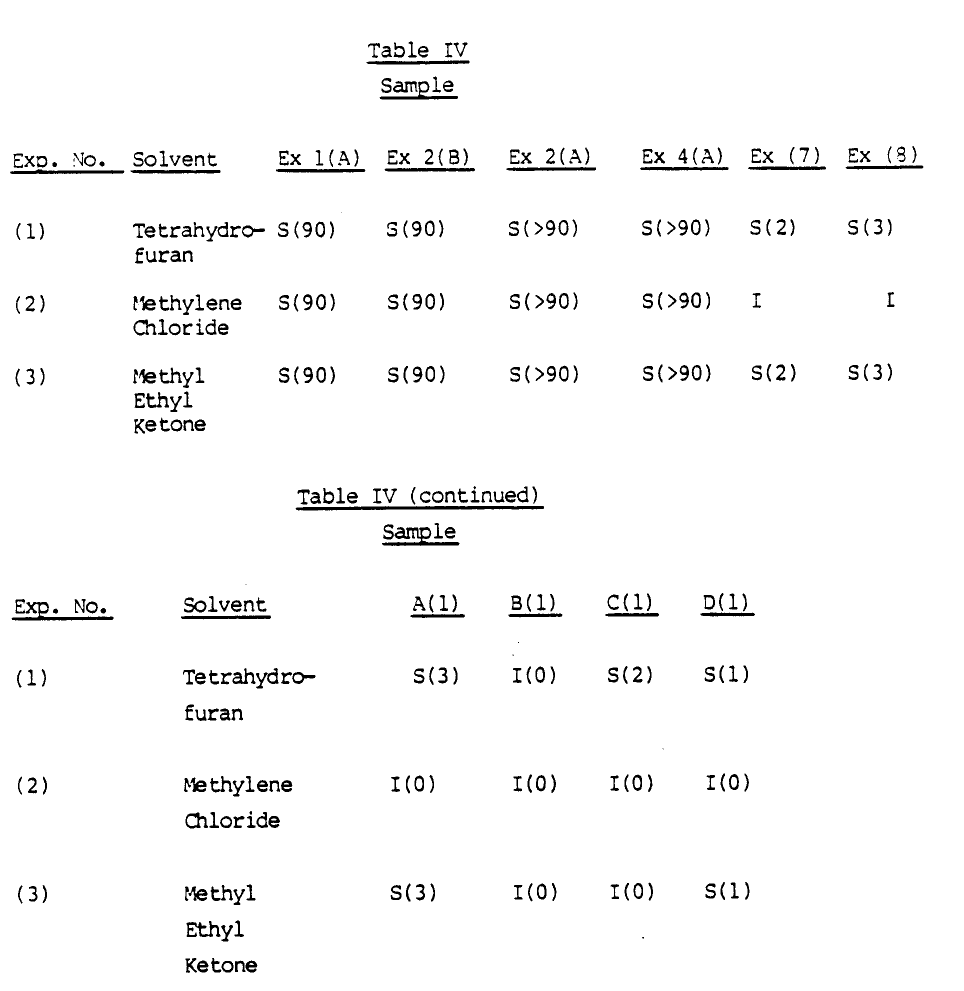

In the table, the following abbreviations are used:
(a) "S" is soluble and
(b) "I" is insoluble.

The number in the parenthesis is the number of days on the shelf before becoming insoluble.

### EXAMPLE 10

### Preparation of the Phenolic Cyanate Resin

A mixture of 204g of novolac (613 number average molecular weight) and 212 g triethylamine was dissolved in one liter of tetrahydrofuran at ambient temperature to form a triethyl amnonium salt of novolac. A 240g sample of cyanogen bromide was dissolved in one liter of tetrahydrofuran under nitrogen atmosphere. The solution containing the triethylammonium salt of novolac was added to cyanogen bromide solution with a average addition rate 7-8 ml/min. During the addition, the temperature of the reaction mixture was maintained at -20 to -30°C. After the reaction was completed, the reaction mixture was stirred for additional one hour and the temperature of reaction mixture rose to +10°C. The product was isolated by filtration to remove triethylammonium salt. The filtrate was purified by precipitation in a cold isopropanol/dry ice mixture (-15°C to -20°C) (twice), and subsequently dried in a vacuum over overnight to produce an off white phenolic cyanate resin. Elemental analysis indicated: wt.% C = 73.5(73wt.%), wt%. of H=4.0(3.82) and wt.% of N=10.6(10.7). The numbers in parenthesis are theoretical, based on the empirical formula C₈H₅NO for a cyanato group containing phenolic resin where R is H. The IR Spectrum indicated absorption at -C=N (22.50(m-¹) and absence of any carbamate. Gas chromatograph analysis showed absence of diethyl cyanamide

### EXAMPLE 11

Example 10 was repeated except that the novolac used had a 980 number average molecular weight. The triethylammonium salt of novolac was added to the cyanogen bromide solution over a period of three hours with an average addition rate of 7-8 ml/min. The reaction mixture was maintained at -30°C. Otherwise the conditions of Example 11 were identical to that of Example 10.

### EXAMPLE 12

Example 10 was again repeated except that a mixture of 50 grams of novolac (613 number average molecular weight) and 51.0 grams of triethylamine was dissolved in 160 grams of tetrahydrofuran at ambient temperature to form the triethyl ammonium salt. 57.7 grams of cyanogen bromide was dissolved in 135 grams of tetrahydrofuran under nitrogen atmosphere. The solution containing the triethylammonium salt of novolac was added to cyanogen bromide solution over a period of one hour. During the addition the temperature of the reaction mixture was maintained at from -10 to -15°C. The procedure of Example 10 was then followed.

### COMPARATIVE I

Example 12 was repeated except that a mixture of 50 grams of novolac (613 number average molecular weight) and 51.0 grams of triethylamine was dissolved in 80 grams of tetrahydrofuran at ambient temperature to form the triethylammonium salt. 57.7 grams of cyanogen bromide was dissolved in 135 grams of tetrahydrofuran under nitrogen atmosphere. The procedure of Example 12 was followed.

### COMPARATIVES FROM PATENTS

Example 1 of U.S. Patent No. 3,448,079 and Examples 1, 3 and 4 of U.S. Patent No. 4,022,755 were repeated.

### SAMPLE TESTING

Measurements were made to determine the gel time of the cyanato containing phenolic resins produced by Example 10 through 12 of the present invention as well as the comparative examples. The samples were tested for gel time using the following procedure:

### Apparatus

Stop watch
0 - 250°C thermometer
Electric hot plate, adjusted to 155± 1°C and enclosed in a wind shield.
4" spatula

### Method

1. For powdered resins: Weigh out a 1.0 gram sample on a watch glass.
2. Quickly dump the complete sample on the center surface of the hot plate and at the same time start the stop watch.
3. Using a 4" spatula spread the resin over a 2 inch square area in the center of the hot plate and stroke the entire area with the spatula at a rate approximating 80 strokes per minute. Without stopping the watch, not the time it took for the resin to melt.
4. Continue stroking, keeping the blake of the spatula close to the surface of the resin, until the resin has passed through a stringy stage and suddenly seems hard and glazed and offers little or no resistance to stroking with the spatula. This end point is best determined only after considerable practice to get the "feel" of the resin as it "lets go" at its gel point.
5. Record number of seconds to melt and number of seconds for gel time (cure time). Subsequent checks on the same sample should agree within ± 5 seconds.

Smoke generation was a visual observation during testing of gel time. The percent diethyl cyanamide was measured by Gel Permeation Chromatography (GC). The results are summarized in Table V:

**TABLE V**

| Example | Gel Time (min) | Smoke | Diethyl Cyanamide wt% by GC |
|---|---|---|---|
| Example 10 | 20-30 | No | None |
| Example 11 | 8-10 | No | None |
| Example 12 | 2-3 | No | None |
| U.S. Pat. Ex. 1 (3,448,079) | Instant-no clear melting point | Smoke | 8 |
| U.S. Pat. Ex. 1 (4,022,755) | 8 Min. | Heavy Smoke | 5-7 |
| U.S. Pat. Ex. 3 (4,022,755) | 5.5-6 Min | Mild Smoke | 4.25 |
| U.S. Pat. Ex. 4 (4,022,755) | 15 Min. | Heavy Smoke | |

The effect of the triethylammonium salt concentration on gel time was also reviewed. The concentration of triethylammonium salt is calculated based on the quantities of novolac resin, triethyl amine and THF. The results are summarized in Table VI.

**TABLE VI**

| Effect of Salt Concentration on Gel time | | |
|---|---|---|
| Example | Salt concentration wt(%) | Gel time (min) |
| Ex. 10 | 15 | 20-30 |
| Ex. 12 | 20 | 2-3 |
| Comp. I | 40 | Product gelled in reactor |

Thermal properties were measured according to thermal gravimetric analysis (TGA) and dynamic mechanical analysis (DMA). TGA was conducted in an argon atmosphere to determine the weight loss of a sample as a function of temperature. About a 30 milligram sample was heated at a 10°C/min. and weight loss measured. The sample was heated up to 900°C in argon and the residue remaining at 900°C is considered to be clean. Glass transition temperature was determined on a 4 cm x 1 cm x 0.3 cm thick plaque by Dynamic Mechanical Analysis. The sample was heated at a rate of 3°C per minute and the frequency was 1 hertz. Results are summarized in Table 3.

**TABLE VII**

| Example | Polymer Decomposition Temperature, °C (TGA) | %Char at 900°C | Tg°C(DMA) |
|---|---|---|---|
| Example 10 | 450 | 67 | > 300 |
| Example 11 | 470 | 69 | > 300 |
| Example 12 | 450-400 | 65-67 | -- |
| U.S. Pat. Ex. 1 (3,448,079) | 300-400 | 47 | -- |
| U.S. Pat. Ex. 1 (4,022,755) | 420-430' | 56 | -- |
| U.S. Pat. Ex. 3 (4,022,755) | 420-430' | 53 | -- |

| | | | |
|---|---|---|---|
| ' lost 16% by weight below 400°C (believed to be from low molecular weight impurities) | | | |

## Claims

1. A completely cured, partially cured or incompletely cured phenolic resin (I) prepared by reacting a bismaleimide compound of the formula: 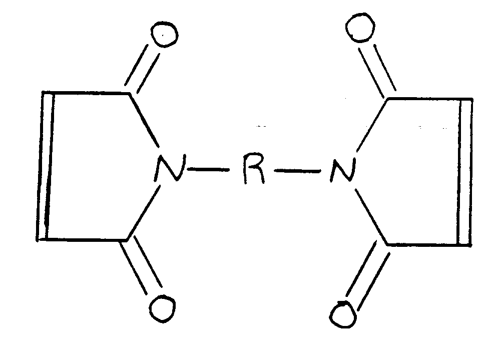 with a phenolic resin of the formula: 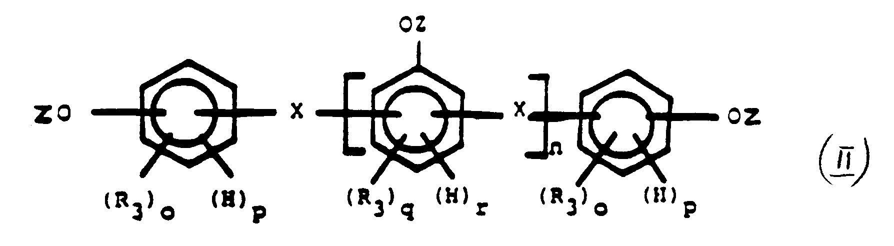 wherein:
-R- is a divalent aromatic or aliphatic moiety;
-X- is a divalent organic moiety;
Z is -CN, or hydrogen and -CN;
q and r are the same or different and are whole numbers from 0 to 3, with the proviso that the sum of q and r at each occurrence is equal to 3;
R₃ is the same or different at each occurrence and is halogen, trihalomethyl, alkyl, alkoxy or phenyl;
n is a positive whole number; and
o and p are the same or different at each occurrence and are whole numbers from 0 to 4 with the proviso that the sum of o and p at each occurrence is equal to 4,
said resin (II) containing from 5 to 100 mole percent of -OCN groups, based on the sum of moles of -OCN and -OH groups,
the phenolic resin (II) having substantially no smoke generation during gel time measurement at 155°C, a completely cured resin (I) being one in less than 20 mole percent of the original cyano groups remain uncyclotrimerized (as determined by IR spectrophotometry), a partially cured resin (I) being one in which 40 to 70 mole percent of the original cyano groups remain uncyclotrimerized, and an incompletely cured resin (I) being one in which 20 to 40 mole percent of the original cyano groups remain uncyclotrimerized.

2. The phenolic resin (I) of claim 1 prepared from a phenolic resin of formula (II) having a gel time measured by the hot plate stroke cure method greater than 1 minute at 155 C.

3. The phenolic resin of claim 2 wherein the gel time is greater than 2 minutes.

4. The resin of claim 3 wherein the gel time is greater than 10 minutes.

5. A resin according to claim 1 wherein said reaction is carried out in the presence of one or more particulate or fibrous fillers.

6. A resin according to claim 1 wherein -R- is a divalent aromatic hydrocarbon having from 6 to 20 carbon atoms or a divalent moiety of the formula: 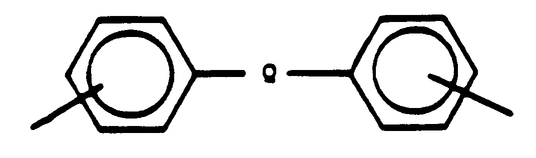 wherein Q is selected from the group consisting of: -O- 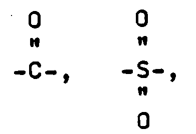 -S-, 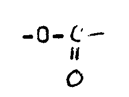 and -C_{y}H_{2y} where y is a positive whole number.

7. A precured resin (I) comprising:
(a) a bismaleimide compound of the formula: 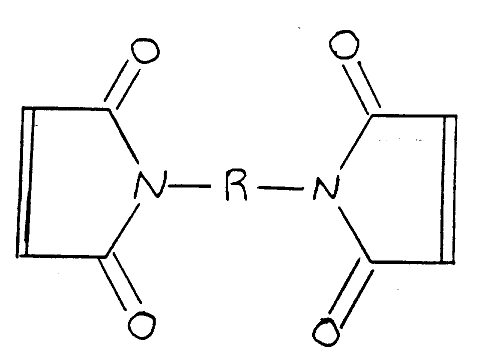
(b) with a phenolic resin of the formula: 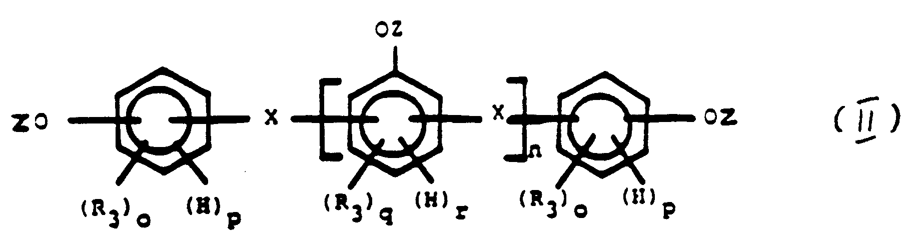
wherein R, R₃, X, Z, n, o, p, q and r have the meanings given in Claim 1, the resin (II) having substantially no smoke generation during gel time measurement at 155°C, a precured resin (I) being one in which substantially 100 mole percent of the original cyano groups remain uncyclotrimerized.

8. A composition according to claim 7 wherein the phenolic resin of formula (II) has a gel time of greater than 1 minute at 155°C.

9. A composition according to claim 8 wherein the phenolic resin of formula (II) has a gel time greater than 10 minutes.

## Patentansprüche

1. Vollständig ausgehärtetes, teilweise ausgehärtetes oder unvollständig ausgehärtetes Phenolharz (I), das durch Umsetzen einer bis-Maleimid-Verbindung der Formel 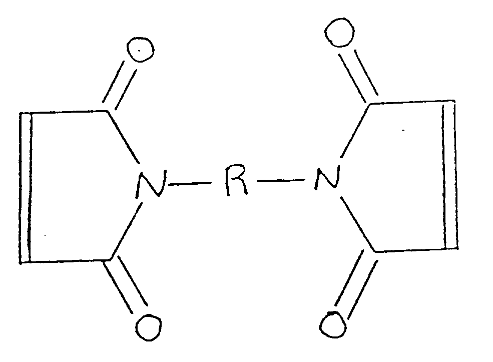 mit einem Phenolharz der Formel: 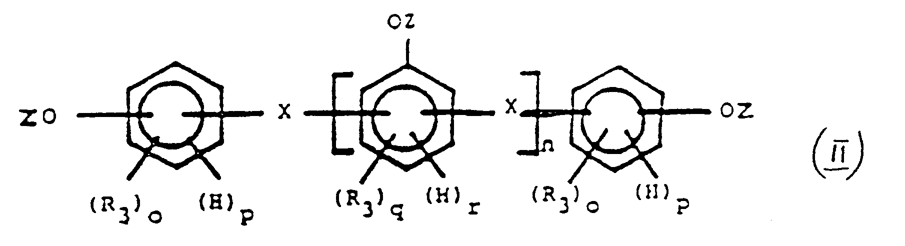 hergestellt ist, worin:
-R- eine zweiwertige aromatische oder aliphatische Hälfte ist:
-X- eine zweiwertige organische Hälfte ist;
Z -CN oder Wasserstoff und -CN ist;
q und r dasselbe oder verschieden und ganze Zahlen von 0
bis 3 unter der Voraussetzung sind, daß die Summe von q und r bei jedem Vorkommen gleich 3 ist;
R₃ bei jedem Vorkommen dasselbe oder verschieden ist und Halogen, Trihalogenmethyl, Alkyl, Alkoxy oder Phenyl ist;
n eine positive ganze Zahl ist; und
o und p bei jedem Vorkommen dasselbe oder verschieden sind und ganze Zahlen von 0 bis 4 unter der Voraussetzung sind, daß die Summe von o und p bei jedem Vorkommen gleich 4 ist,
wobei das Harz (II) 5 bis 100 Molprozent an -OCN-Gruppen, auf Basis der Summe der Molzahlen von -OCN und -OH-Gruppen, enthält,
wobei das Phenolharz (II) während der Gelzeitmessung bei 155°C im wesentlichen keine Rauchentwicklung aufweist, und wobei ein vollständig ausgehärtetes Harz (I) ein solches ist, bei dem weniger als 20 Molprozent der ursprünglichen Cyanogruppen uncyclotrimerisiert bleiben (wie durch IR-Spektrophotometrie bestimmt wird), ein teilweise ausgehärtetes Harz (I) ein solches ist, bei dem 40 bis 70 Molprozent der ursprünglichen Cyanogruppen uncyclotrimerisiert bleiben, und ein unvollständig ausgehärtetes Harz (I) ein solches ist, bei dem 20 bis 40 Molprozent der ursprünglichen Cyanogruppen uncyclotrimerisiert bleiben.

2. Phenolharz (I) nach Anspruch 1, das aus einem Phenolharz der Formel (II) hergestellt ist und eine mit der Heißplatten-Strichaushärtmethode gemessene größere Gelzeit als 1 Minute bei 155 C besitzt.

3. Phenolharz nach Anspruch 2, bei dem die Gelzeit größer als 2 Minuten ist.

4. Harz nach Anspruch 3, bei dem die Gelzeit größer als 10 Minuten ist.

5. Harz nach Anspruch 1, bei dem die Reaktion in Gegenwart eines oder mehrerer teilchenförmiger oder faseriger Füllstoffe ausgeführt wird.

6. Harz nach Anspruch 1, bei dem -R- ein zweiwertiger aromatischer Kohlenwasserstoff mit 6 bis 20 Kohlenstoffatomen oder mit einer zweiwertigen Hälfte der Formel 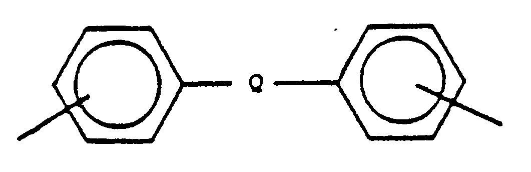 ist, worin Q aus der folgenden Gruppe gewählt ist:
-O- 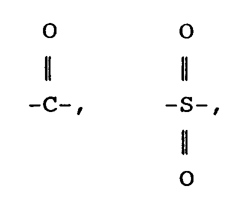 -S-, 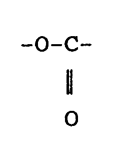 und C_{y}H_{2y} worin y eine positive ganze Zahl ist.

7. Vorausgehärtetes Harz (I) mit:
(a) einer bis-Maleimidverbindung der Formel 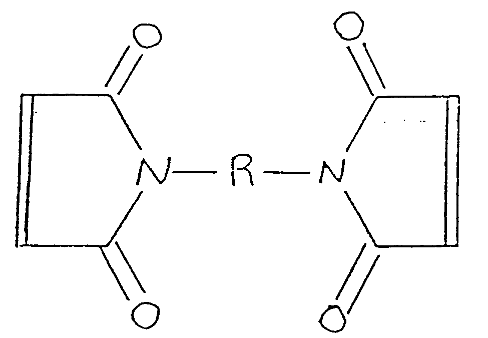
(b) mit einem Phenolharz der Formel: 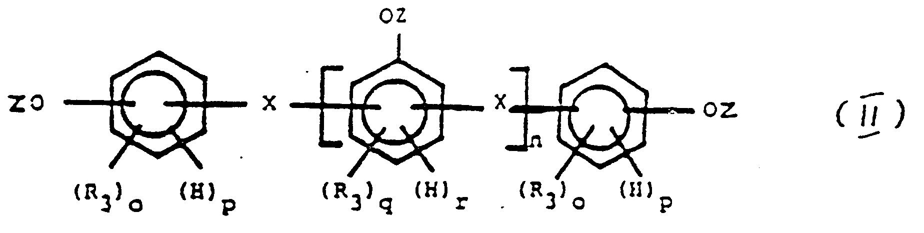
worin R, R₃, X, Z, n, o, p, q und r die im Anspruch 1 angegebene Bedeutung haben, wobei das Harz (II) während der Gelzeitmessung bei 155°C im wesentlichen keine Rauchentwicklung aufweist, und wobei ein vorausgehärtetes Harz (I) ein solches ist, bei dem im wesentlichen 100 Molprozent der ursprünglichen Cyanogruppen uncyclotrimerisiert bleiben.

8. Zusammensetzung nach Anspruch 7, bei dem das Phenolharz der Formel (II) eine größere Gelzeit als 1 Minute bei 155°C besitzt.

9. Zusammensetzung nach Anspruch 8, bei dem das Phenolharz der Formel (II) eine größere Gelzeit als 10 Minuten besitzt.

## Revendications

1. Résine pnénolique (I) complètement durcie, partiellement durcie ou incomplètement durcie préparée par réaction d'un composé de bismaléimide répondant à la formule: 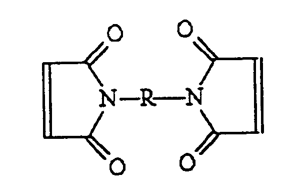 avec une résine phénolique répondant à la formule: 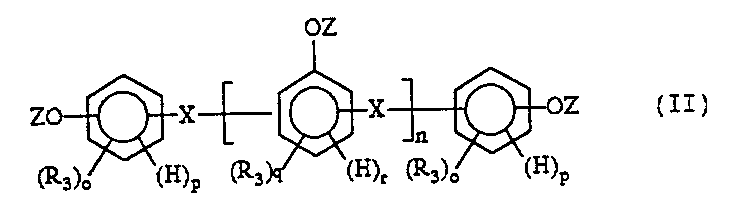 où:
-R- est une partie aromatique ou aliphatique divalente;
-X- est une partie organique divalente;
Z est un -CN, ou un hydrogène et un -CN;
q et r sont identiques ou différents et sont égaux à des nombres entiers de 0 à 3, sous réserve que la somme de q et r à chacune de leurs apparitions soit égale à 3;
R₃ est identique ou différent lors de chacune de ses apparitions et est un halogène, un trialométhyle, un alkyle, un alcoxy ou un phényle;
n est un nombre entier positif; et
o et p sont identiques ou différents lors de chacune de leurs apparitions et sont des nombres entiers de 0 à 4 sous réserve que la somme de o et p à chacune de leurs apparitions soit égale à 4,
ladite résine (II) contenant de 5 à 100 moles pourcent de groupes -OCN, par rapport à la somme des nombres de moles de groupes -OCN et -OH,
la résine phénolique (II) ne produisant pratiquement pas de fumée lors de la mesure de son temps de gélification à 155°C, une résine (I) complètement durcie étant une résine dans laquelle moins de 20 moles pourcent des groupes cyanos initiaux restent à l'état non cyclotrimérisé (ceci étant déterminé par spectrophotométrie IR), une résine (I) partiellement durcie étant une résine dans laquelle 40 à 70 moles pourcent des groupes cyanos initiaux restent à l'état non cyclotrimérisé, et une résine (I) incomplètement durcie étant une résine dans laquelle 20 à 40 moles pourcent des groupes cyanos initiaux restent à l'état non cyclotrimérisé.

2. Résine phénolique (I) selon la revendication 1 préparée à partir d'une résine phénolique répondant à la formule (II) ayant un temps de gélification, mesuré par la méthode du durcissement par battement sur plaque chauffante, supérieur à une minute à 155°C.

3. Résine phénolique selon la revendication 2, dans laquelle le temps de gélification est supérieur à 2 minutes.

4. Résine selon la revendication 3, dans laquelle le temps de gélification est supérieur à 10 minutes.

5. Résine selon la revendication 1, dans laquelle ladite réaction est effectuée en présence d'une ou plusieurs charges particulaires ou fibreuses.

6. Résine selon la revendication 1, dans laquelle -R-est un hydrocarbure aromatique divalent ayant de 6 à 20 atomes de carbone ou une partie divalente répondant à la formule: 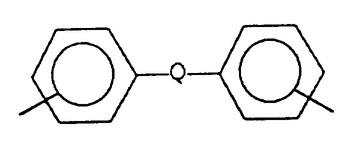 dans laquelle q est sélectionné dans le groupe constitué de:
-O-, 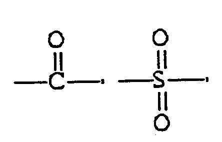 -S-, 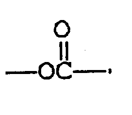 et 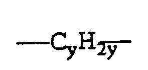 où y est un nombre entier positif.

7. Résine prédurcie (I) comprenant:
(a) un composé de bismaléimide répondant à la formule: 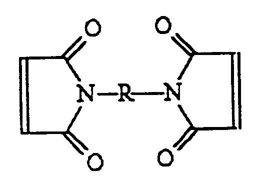
(b) avec une résine pnénolique répondant à la formule: 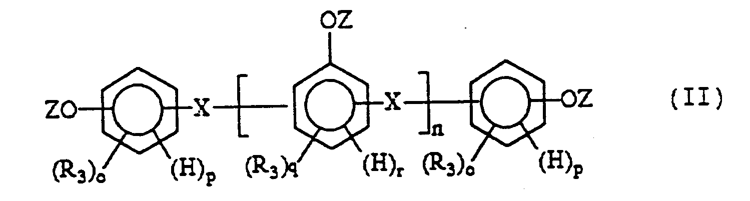
où R, R₃, X, Z, n, o, p, q et r ont les significations indiquées dans la revendication 1, la résine (II) ne produisant pratiquement pas de fumée lors de la mesure de son temps de gélification à 155°C, une résine prédurcie (I) étant une résine dans laquelle pratiquement 100 moles pourcent des groupes cyanos initiaux restent à l'état non cyclotrimérisé.

8. Composition selon la revendication 7, dans laquelle la résine phénolique de la formule (II) a un temps de gélification supérieur à une minute à 155°C.

9. Composition selon la revendication 8, dans laquelle la résine phénolique de la formule (II) a un temps de gélification supérieur à 10 minutes.
